Europäisches Patentamt

(19) European Patent Office

Office européen des brevets

(11) Veröffentlichungsnummer : **0 071 220 B2**

(12) # NEUE EUROPÄISCHE PATENTSCHRIFT

(45) Veröffentlichungstag der neuen Patentschrift :
27.03.91 Patentblatt 91/13

(51) Int. Cl.⁵ : **B63B 35/79, B63H 9/10**

(21) Anmeldenummer : 82106698.2

(22) Anmeldetag : 24.07.82

(54) Gabelbaum oder Spreizgaffel für Windsurfbretter.

(30) Priorität : 27.07.81 DE 8121972 U
14.10.81 DE 8130078 U
15.02.82 DE 8204104 U

(43) Veröffentlichungstag der Anmeldung :
09.02.83 Patentblatt 83/06

(45) Bekanntmachung des Hinweises auf die
Patenterteilung :
23.10.85 Patentblatt 85/43

(45) Bekanntmachung des Hinweises auf die
Entscheidung über den Einspruch :
27.03.91 Patentblatt 91/13

(84) Benannte Vertragsstaaten :
AT BE CH DE FR GB IT LI LU NL SE

(56) Entgegenhaltungen :
DE-C- 1 914 604
DE-U- 7 916 846
FR-A- 2 365 478
FR-A- 2 439 130

(56) Entgegenhaltungen :
DE-Z "Die Yacht", Oktober 1979, Nr. 22, S. 76
Claviez Wolfram, "Seemännisches Wörterbuch", 2. Auflage, Verlag Delius, Klasing, Bielefeld S. 309

(73) Patentinhaber : **Mistral Windsurfing AG**
**Alte Winterthurer Strasse**
**CH-8303 Nürensdorf-Zürich (CH)**

(72) Erfinder : **Frank, Dieter**
**Steingasse 5**
**W-8242 Bischofswiesen (DE)**
Erfinder : **Adamek, Joachim**
**Augustenstrasse 49**
**W-8000 München 2 (DE)**
Erfinder : **Gaide, Albert**
**Ferme du Château**
**CH-111 Monnaz (CH)**

(74) Vertreter : **Grupe, Peter, Dipl.-Ing. et al**
**Patentanwaltsbüro**
**Tiedtke-Bühling-Kinne-Grupe-Pellmann-Grams-Struif-\**
**Bavariaring 4**
**W-8000 München 2 (DE)**

EP 0 071 220 B2

Jouve, 18, rue Saint-Denis, 75001 PARIS

**Beschreibung**

Die Erfindung betrifft einen Gabelbaum oder Spreizgaffel für Windsurfbretter mit zwei nach außen gekrümmten in der Länge verander baren Bäumen und einem an einem Mast befestigbaren Bugbeschlag und einem Heckbeschlag zum Halten des Schothornes eines zwischen den beiden als Handhabe dienenden Bäumen gespannten Segels, wobei die Bäume durch Bug- und Heckbeschlag miteinander verbunden sind.

Derartige Gabelbäume für Windsurfbretter sind allgemein bekannt. Gemäß der neueren Entwicklung des Sportes des Windsurfens ist man jedoch dazu übergegangen für verschiedene Brettkonstruktionen und insbesondere verschiedene Windbedingungen Segel unterschiedlicher Schnitte zu fahren. Die üblichen Gabelbäume weisen eine festgelegte Länge auf, wobei der Abstand zwischen Bugbeschlag und Heckbeschlag etwa dem Abstand zwischen Vorliek und Schothorn eines Regattasegels von 6,5 qm entspricht. Für Sprungbretter sind diese Gabelbäume meistens zu lang und für ausgesprochene Flautensegel meistens zu kurz. Bei Starkwind und für Sprungbretter werden in neuerer Zeit sogenannte Maui-Segel oder High-Clew-Segel gefahren, welche einen wesentlich kleineren Abstand zwischen Vorliek und Schothorn aufweisen. Gleiches trifft für Sturmsegel zu. Insbesondere bei Sprungbrettern und Gleitern bei denen derartige verkürzte Segel gefahren werden, kommt es deswegen vor, daß auf Halbwindkursen das Hinterende des Gabelbaumes im Wasser schleift. Bisher war es daher erforderlich, für die verschiedenen Segelarten mindestens zwei verschiedene Gabelbäume, nämlich einen langen für Regattasegel und einen kurzen für Maui-und Sturmsegel zu benutzen. Für ausgesprochene Flautensegel hat man sich mit der nachträglichen Verlängerung handelsüblicher Gabelbäume beholfen.

Aus der DE-Z "Die Jacht", Oktober 1979, Nr. 22, Seite 76, ist ein Gabelbaum der oben genannten Art bekannt, bei welchem der Gabelbaum teilbar ausgebildet ist und durch Austausch von Zwischenstücken in den Bäumen zwei verschiedene Größen zusammengebaut werden können, indem einmal die lose mitgelieferten langen Zwischenstücke und einmal die losen kurzen Zwischenstücke eingesetzt werden. Unabhängig davon, daß dieser bekannt Gabelbaum nur für zwei Se gelgrößen geeignet ist, ist es immer erforderlich lose Zwischenstücke in verschiedenen Größen mitzuführen, welche auch verloren gehen können. Darüberhinaus ist die Änderung der Länge des Gabelbaums vergleichsweise umständlich.

Der Erfindung liegt die Aufgabe zugrunde, einen mechanisch robusten verstellbaren Gabelbaum zu schaffen, der bei sämtlichen verschiedenen Segelschnitten verwendbar ist.

Erfindungsgemäß wird diese Aufgabe bei einem Gabelbaum oder Spreizgaffel der oben angegebenen Art im wesentlichen dadurch gelöst, daß die Bäume aus teleskopartig verlängerbaren und verkürzbaren Rohren bestehen, und daß an jedem der Bäume eine Einrichtung zum Fixieren der eingestellten Stellung vorgesehen ist.

Hierdurch wird der Vorteil erreicht, daß man beliebig, je nach gefahrenem Segel, den Gabelbaum in einen langen oder in einen kurzen Gabelbaum umwandeln kann.

Bei einer vorteilhaften Ausführungsform nach der Erfindung ist der Heckbeschlag fest mit zwei hinteren Baumabschnitten verbunden, deren Außendurchmesser dem Innendurchmesser der mit dem Bugbeschlag fest verbundenen vorderen Baumabschnitte entspricht, wobei die hinteren Baumabschnitte in den vorderen Baumabschnitten verschiebbar aufgenommen sind.

Eine vorteilhafte Ausführungsform besteht darin, daß die Vorrichtungen zum Fixieren aus auf den hinteren Baumabschnitten versetzbaren und festlegbaren Klemmteilen bestehen.

Hierdurch wird der Vorteil erreicht, daß in mechanisch einfacher und robuster Weise die Fixierung der jeweils eingestellten Länge sichergestellt ist.

Bei einer vorteilhaften Ausführungsform nach der Erfindung bestehen die Klemmteile aus mittels Exzenterschnallen zusammendrückbaren Schalen. Bei den Exzenterschnallen handelt es sich beispielsweise um Schnallen, wie sie von Skistiefeln bekannt sind.

In diesem Zusammenhang ist es vorteilhaft, die Schalen mit einer inneren Gummierung zu versehen, so daß die Klemmung unter Reibungsschluß auf den hinteren Baumabschnitten erfolgt. Bevorzugt bestehen die Schalen aus einem Kunststoff, wobei die Schnallen ebenfalls aus Kunststoff bestehen können.

Die Schalen können mit den vorderen Baumabschnitten verbunden sein, jedoch ist es von Vorteil, diese als unabhängige Bauteile auszubilden, welche auf den hinteren Baumabschnitten versetzbar sind. Durch den im Segel herrschenden Druck werden dann die vorderen Baumabschnitte gegen die Kunststoffschalen gedrückt. Bei dieser Ausführungsform ist es vorteilhaft, an den Schalen eine an den vorderen Baumabschnitten anliegende Dichtung vorzusehen, welche das Eindringen von Wasser in diese verhindert.

Bevorzugt sind die vorderen Baumabschnitte mit einem elastischen Überzug aus Gummi od. dgl. versehen, um die Griffigkeit zu erhöhen.

Um zu verhindern, daß die Rohre, aus denen die Bäume bestehen, voll Wasser laufen, sind die Baumabschnitte bevorzugt ausgeschäumt, wobei bei den vorderen Baumabschnitten selbstverständlich der Bereich, in welchem die hinteren Baumabschnitte eingeschoben werden, freigelassen ist.

Bevorzugt ist ferner zwischen den vorderen und hinteren Baumabschnitten eine Dichtung vorzusehen, welche beispielsweise aus einem O-Ring bestehen kann.

Ein bevorzugter Verstellbereich beträgt 30 bis 40 cm.

Alternativ können die Vorrichtungen zum Fixieren der eingestellten Stellung aus Überwurfmuttern auf je einem Gewinde an den vorderen Baumabschnitten bestehen, welche auf einen konischen Ring einwirken, der beim Anziehen der Überwurfmutter Schlitze in den Hinterenden der vorderen Baumabschnitte zusammenpreßt, so daß eine kraftschlüssige Verbindung zwischen vorderen und hinteren Baumabschnitten hergestellt wird.

Eine besonders vorteilhafte Ausführungsform kann dadurch geschaffen werden, daß an jedem der Bäume eine formschlüssige Kupplung zum stufenweisen Fixieren der eingestellten Relativlage der Baumabschnitte zueinander vorgesehen ist.

Hierdurch wird der Vorteil erreicht, daß man, wie bei den anderen Ausführungsformen nach der Erfindung, beliebig je nach gefahrenem Segel den Gabelbaum in einen langen oder einen kurzen Gabelbaum umwandeln kann, wobei durch die formschlüssige Kupplung der teleskopartig verschiebbaren Baumabschnitte eine mechanisch sichere und robuste Festlegung der jeweils eingestellten Länge sichergestellt ist.

Bei einer vorteilhaften Weiterbildung dieser Ausführungsform sind die hinteren Baumabschnitte in den vorderen Baumabschnitten verschiebbar aufgenommen, indem der Außendurchmesser der hinteren Baumabschnitte etwa dem Innendurchmesser der vorderen Baumabschnitte entspricht. Hierdurch wird der Vorteil erreicht, daß die als Handhabe dienenden vorderen Baumabschnitte dicker ausgebildet sein können.

Im einzelnen kann die Neuerung dadurch weitergebildet werden, daß die Kupplung Formkörper aufweisen, welche in in Abständen an den hinteren Baumabschnitten vorgesehene Ausnehmungen einrückbar sind, wobei zum Einrükken eine Handhabe vorgesehen ist, und daß die Formkörper mit Federelementen verbunden sind, welche in die ausgerückte Stellung der Kupplung vorgespannt sind.

Bei einer besonders vorteilhaften Ausführungsform nach der Erfindung sind die Ausnehmungen in einer Kunststoffschiene ausgebildet, welche in einer Nut der hinteren Baumabschnitte formschlüssig gehalten ist. Bevorzugt ist hierzu eine im Querschnitt schwalbenschwanzförmige Nut.

Im einzelnen kann diese Ausführungsform vorteilhaft dadurch weitergebildet werden, daß zwei in horizontaler Ebene gegenüberliegende Nuten an den hinteren Formabschnitten vorgesehen sind. Die hinteren Baumabschnitte sind hierbei mit den Nuten als einstückige Aluminiumprofile ausgebildet. Abgesehen von der ausgesprochen kostengünstigen Herstellung bietet diese Ausführungsform den zusätzlichen Vorteil, daß die hinteren Baumabschnitte durch die Nuten selbst eine erhebliche Aussteifung in der Hauptbelastungsrichtung erhalten. Darüberhinaus ist es nicht notwendig, zur Herstellung der formschlüssigen Kupplung Lochreihen in den hinteren Baumabschnitten zu bohren, wodurch die Herstellungskosten erheblich gesenkt werden können und die Wasserdichtigkeit erhalten bleibt.

Besonders bevorzugt ist es, daß die Querschnittsverhältnisse zwischen Kunststoffschiene und Nut derart gewählt sind, daß die Schiene zwischen den Ausnehmungen mit dem Außenumfang der hinteren Baumabschnitte eine gemeinsame Fläche bildet.

Bei einer ganz besonders bevorzugten Ausführungsform nach der Erfindung sind die Materialbereiche zwischen den Ausnehmungen ballig und geringfügig über den Außenumfang der hinteren Baumabschnitte vorstehend ausgebildet. Hierdurch wird der Vorteil erzielt, daß zwischen den hinteren Baumabschnitten und der Innenfläche der vorderen Baumabschnitte an den Materialbereichen zwischen den Ausnehmungen lediglich punktförmige Berührungszonen ausgebildet werden. Hierdurch ist ein leichtes und verkantungsfreies Verschieben der Baumabschnitte ineinander gewährleistet.

Bei einer vorteilhaften Weiterbildung nach der Erfindung sind die Federelemente durch mit den vorderen Baumabschnitten verbundene und in Längsrichtung der Baumabschnitte liegende Blattfedern gebildet, wobei die Handhabe als axial auf den vorderen Baumabschnitten verschiebbare, die Blattfedern und die Formkörper einschließende Hülse ausgebildet ist und die Formkörper beweglich in Bohrungen der vorderen Baumabschnitte angeordnet sind und wobei die Hülse auf der Innenseite Nockenflächen aufweist, welche beim Verschieben die Formkörper durch die Bohrungen in die Ausnehmungen der hinteren Baumabschnitte drücken. Hierdurch wird eine sehr robuste und besonders bedienungsfreundliche Art der Kupplung geschaffen.

Die Hülse besteht bevorzugt aus Gummi oder Kunststoff, wobei die Nockenflächen entweder durch eine Ringfläche, welche auf dem vorderen Gabelbaumabschnitt gleitet oder durch eine innere Verstärkung gebildet sein kann.

Im einzelnen können die Nockenflächen durch einen mit der Hülse verbundenen Metallring gebildet sein, welcher gleichzeitig eine Führung für die Schiebebewegung der Hülse bildet.

Bei einer abgewandelten Ausführungsform nach der Erfindung sind die Formkörper mit radialen Federelementen verbunden und es ist eine drehbare Hülse mit Nockenflächen vorgesehen, welche die Formkörper, welche beweglich in Bohrungen der vorderen Baumabschnitte angeordnet sind, einschließt, wobei durch Drehen der Hülse die Formkörper durch die Bohrungen in die Ausnehmung der hinteren Baumabschnitte gedrückt werden.

Vorzugsweise sind die Formkörper mit einem gemeinsamen bogenförmigen Federelement verbunden, welches gleichzeitig die Formkörper in den Bohrungen der vorderen Baumabschnitte festhält. Diese Ausführungsform stellt eine besonders leichte und robuste Form der Kupplung dar, welche darüberhinaus in den Fertigungskosten günstig ist.

Weitere vorteilhafte Einzelheiten nach der Erfindung ergeben sich aus der vorliegenden Beschreibung oder den Ansprüchen, sowie den in den Zeichnungen beispielhaft veranschaulichten Ausführungsformen anhand derer die Erfindung im folgenden näher erläutert wird. In den Zeichnungen zeigt

Fig. 1 die Draufsicht auf den hinteren Bereich eines Gabelbaumes nach der Erfindung ;

Fig. 2 eine schematische Schnittansicht eines Teiles von Fig. 1 ;

Fig. 3 die Draufsicht auf den hinteren Bereich eines Gabelbaumes einer zweiten Ausführungsform ;

Fig. 4 eine schematische Schnittansicht eines Teiles von Fig. 3 ;

Fig. 5 die Draufsicht auf den hinteren Bereich eines Gabelbaumes nach der Erfindung in einer dritten Ausführungsform ;

Fig. 6 in vergrößertem Maßstab eine Schnittansicht einer der formschlüssigen Kupplungsvorrichtungen der Ausführungsform gemäß Fig. 5 ;

Fig. 7 eine Schnittansicht von Fig. 6 längs der Linie VII-VII in geringfügig vergrößertem Maßstab ;

Fig. 8 eine Fig. 6 entsprechende Schnittansicht einer abgewandelten Ausführungsform nach der Erfindung ;

Fig. 9 eine Fig. 7 entsprechende Schnittansicht einer abgewandelten Ausführungsform nach der Erfindung ;

Fig. 10 eine Schnittansicht von Fig. 9 längs der Linie X-X ;

Fig. 11 eine Schnittansicht einer Einzelheit in vergrößertem Maßstab ;

Fig. 12 eine Schnittansicht einer weiteren Ausführungsform und

Fig. 13 eine Fig. 12 entsprechende Schnittansicht einer abgewandelten Ausführungsform.

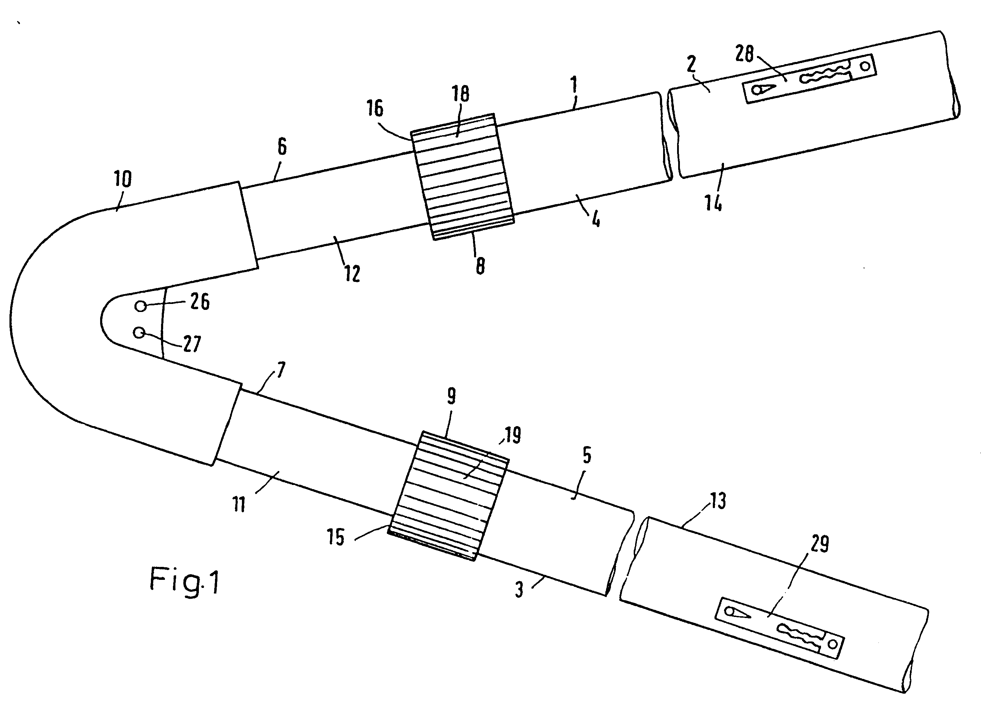

In Fig. 1 ist der hintere Bereich eines Gabelbaumes 1 nach der Erfindung veranschaulicht, wobei der vordere Bereich mit Bugbeschlag weggelassen wurde und an sich bekannt ist. Im hinteren Bereich ist der Gabelbaum 1 nach der Erfindung in seiner Länge verstellbar.

Der Gabelbaum 1 besteht aus zwei, nach außen gekrümmten Bäumen 2, 3, welche vorne mit dem nicht dargestellten Bugbeschlag und hinten mit einem Heckbeschlag 10 miteinander verbunden sind. Der Heckbeschlag 10 besteht üblicherweise aus einem Kunststoffteil und enthält zwei Bohrungen 26, 27

durch welche eine Trimmschot (nicht dargestellt) hindurchgeführt wird, welche das Schothorn des Segels (nicht dargestellt) hält und in zwei Belegklemmen 28, 29 festlegbar ist.

Die Bäume 2 und 3 bestehen aus Rohren 4, 5 und 6 und 7, welche teleskopartig ineinander schiebbar sind. Die jeweils vorgenommene Stellung ist hierbei durch je eine Einrichtung 8 oder 9 fixierbar.

Die Rohre 6 und 7 sind fest mit dem Heckbeschlag 10 verbunden und bilden die hinteren Baumabschnitte 11 und 12, welche in die vorderen Baumabschnitte 13, 14 einschiebbar sind. Zu diesem Zweck entspricht der Außendurchmesser der Rohre 6 und 7 im wesentlichen dem Innendurchmesser der Rohre 4 und 5.

Die Vorrichtungen 8 und 9 zum Fixieren der eingestellten Länge sind bevorzugt an den Hinterenden 15, 16 der vorderen Baumabschnitte 13, 14 angeordnet.

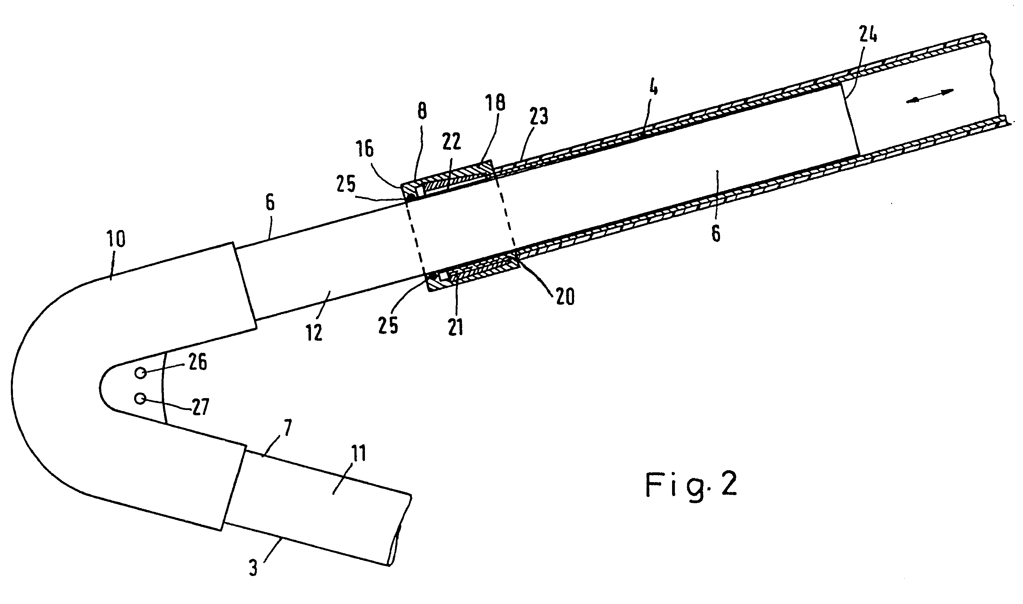

Wie sich insbesondere aus der schematischen Schnittdarstellung von Fig. 2 ergibt, in welcher der hintere Baumabschnitt 12 nicht geschnitten dargestellt ist, besteht eine Vorrichtung 8 zum Fixieren bei einer beispielhaften Ausführungsform aus einer Überwurfmutter 18, welche auf ein Außengewinde 20 am Hinterende 16 des vorderen Baumabschnittes 14 aufgeschraubt ist. Die Überwurfmutter 18 wirkt auf einen konischen Ring 21, welcher beim Anziehen der Überwurfmutter 18 einen Schlitz 22 im Hinterende 16 des vorderen Baumabschnittes 14 zusammenpreßt. Hierdurch wird die jeweils eingestellte Länge durch Formschluß fixiert.

Die Vorrichtung 9 am Hinterende 15 des vorderen Baumabschnittes 13 ist entsprechend ausgebildet.

In Fig. 2 ist ferner noch gezeigt, daß die hinteren Baumabschnitte 11, 12 gegenüber den vorderen Baumabschnitten 13, 14 vorzugsweise abgedichtet sind, wozu ein O-Ring 25 dient.

Bei bevorzugten Ausführungsformen sind die hinteren Baumabschnitte 11, 12 mit einem Kunststoffschaum vollständig gefüllt (in den Zeichnungen nicht dargestellt), während die vorderen Baumabschnitte 13, 14 ab der vordersten Stellung, die das Vorderende 24 der hinteren Baumabschnitte 11, 12 im Inneren der Rohre 4, 5 einnehmen kann, ebenfalls ausgeschäumt sind.

Um sämtlichen Segelschnitten Rechnung tragen zu können, sollte der Verschiebeweg der Rohre 6, 7 in den Rohren 4, 5 etwa 30 bis 40 cm betragen.

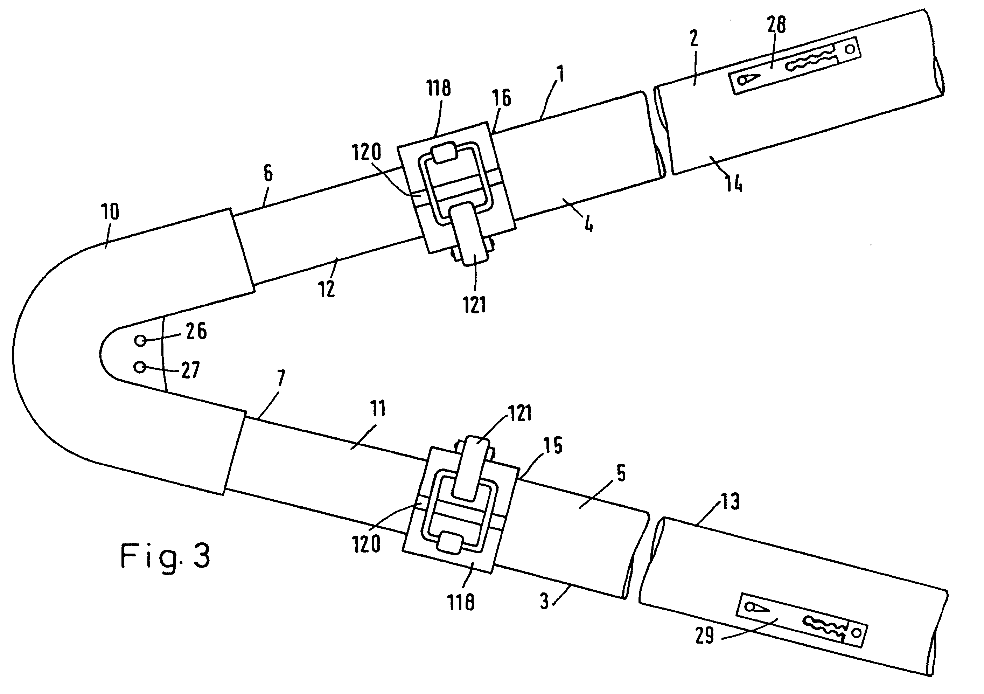

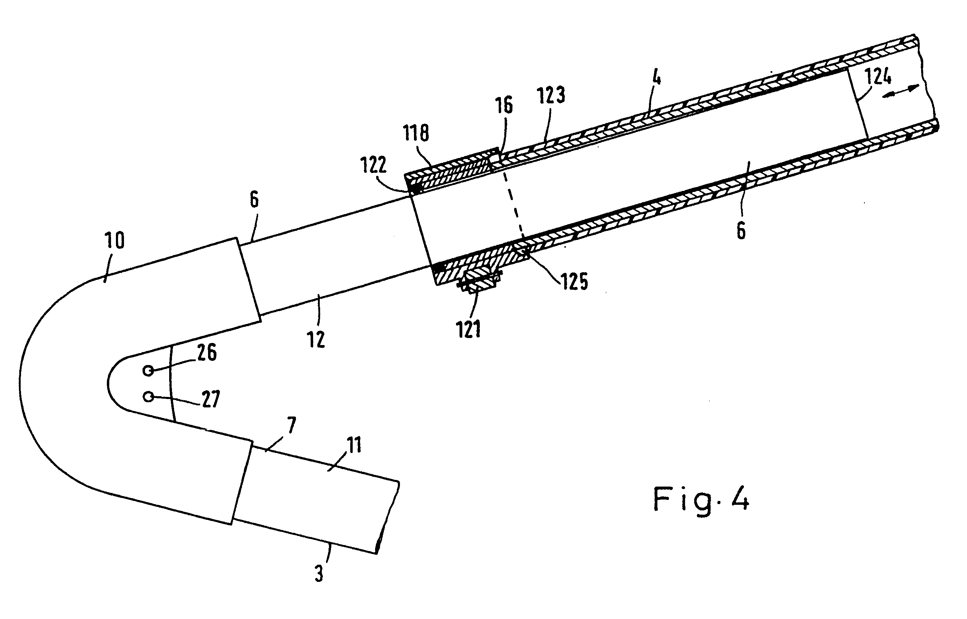

In den Fig. 3 und 4 ist der hintere Bereich eines Gabelbaumes 1 nach einer zweiten Ausführungsform veranschaulicht

Der Gabelbaum 1 besteht aus zwei, nach außen gekrümmten Bäumen 2, 3, welche vorne mit dem nicht dargestellten Bugbeschlag und hinten mit einem Heckbeschlag 10 miteinander verbunden sind. Der Heckbeschlag 10 besteht üblicherweise aus einem Kunststoffteil und enthält zwei Bohrungen 26, 27,

durch welche eine Trimmschot (nicht dargestellt) hindurchgeführt wird, welche das Schothorn des Segels (nicht dargestellt) hält und in zwei Belegklemmen 28, 29 festlegbar ist.

Die Bäume 2 und 3 bestehen aus Rohren 4, 5 und 6 und 7, welche teleskopartig ineinander schiebbar sind. Die jeweils vorgenommene Stellung ist hierbei durch je eine Einrichtung 8 oder 9 fixierbar.

Die Rohre 6 und 7 sind fest mit dem Heckbeschlag 10 verbunden und bilden die hinteren Baumabschnitte 11 und 12, welche in die vorderen Baumabschnitte 13, 14 einschiebbar sind. Zu diesem Zweck entspricht der Außendurchmesser der Rohre 6 und 7 im wesentlichen dem Innendurchmesser der Rohre 4 und 5.

Die Vorrichtungen 8 und 9 zum Fixieren der eingestellten Länge bestehen bei dem veranschaulichten Ausführungsbeispiel je aus einer vorzugsweise aus Kunststoff bestehenden Schale 118, welche in Axialrichtung einen Schlitz 120 aufweist. Der Schlitz 120 wird, wie in Fig. 3 gezeigt, von einer Exzenterschnalle 121 übergriffen, wie sie beispielsweise von Kunststoffskistiefeln bekannt ist. Durch die Exzenterschnalle wird in der jeweils eingestellten Länge die Schale 118 auf den hinteren Baumabschnitten 11, 12 kraftschlüssig festgehalten. Zu diesem Zweck weisen die Schalen 118 auf der Innenseite, welche in ihrer Form dem Querschnitt der hinteren Baumabschnitte 11, 12 entspricht, eine Gummierung 122, auf die zur Erhöhung des Reibungsschlusses dient.

Beim Schließen der Exzenterschnallen 121 wird unter elastischer Verformung der Gummierung 122 unter Verringerung des Schlitzes 120 die Schale 118 zusammengepreßt.

Die Schale 118 kann fest mit den Hinterenden 15, 16 der vorderen Baumabschnitte 13, 14 verbunden sein.

Bei einer bevorzugten Ausführungsform nach der Erfindung jedoch sind die Schalen 118 als getrennte Bauteile vorgesehen, und weisen vorzugsweise auf der dem Schlitz 120 gegenüberliegenden Seite ein Scharnier oder dgl. beispielsweise bei Ausbildung aus Kunststoff eine als Scharnier wirkende Schwachstelle auf, so daß sich die Schalen 118 radial von den Baumabschnitten 11, 12 abnehmen lassen.

Bei dieser Ausführungsform wird zum Verstellen der Länge des Gabelbaumes je eine der Schalen an der gewünschten Stelle auf den hinteren Baumabschnitten 11, 12 durch schließende Exzenterschnallen 121 fixiert, wobei dann durch den auf die Bäume durch das gespannte Segel (nicht dargestellt) ausgeübte Zug die Hinterenden 15, 16 der vorderen Baumabschnitte 13, 14 fest gegen die Vorderkanten der Schalen 118 gedrückt werden.

Um zu verhindern, daß in die vorderen Baumabschnitte 13, 14 Wasser eindringen kann, ist bevorzugt an den Schalen 118 an der Vorderkante, an welcher die Hinterenden 15, 16 der vorderen Baumabschnitte 13, 14 zur Anlage kommen, eine Dichtung 125 vorgesehen, welche ein Eindringen von Wasser an dieser Verbindungsstelle verhindert.

Bei bevorzugten Ausführungsformen sind die hinteren Baumabschnitte 11, 12 mit einem Kunststoffschaum vollständig gefüllt (in den Zeichnungen nicht dargestellt), während die vorderen Baumabschnitte 13, 14 ab der vordersten Stellung, die das Vorderende 24 der hinteren Baumabschnitte 11, 12 im Inneren der Rohre 4, 5 einnehmen kann, ebenfalls ausgeschäumt sind.

Um sämtlichen Segelschnitten Rechnung tragen zu können, sollte der Verschiebeweg der Rohre 6, 7 in den Rohren 4, 5 etwa 30 bis 40 cm betragen.

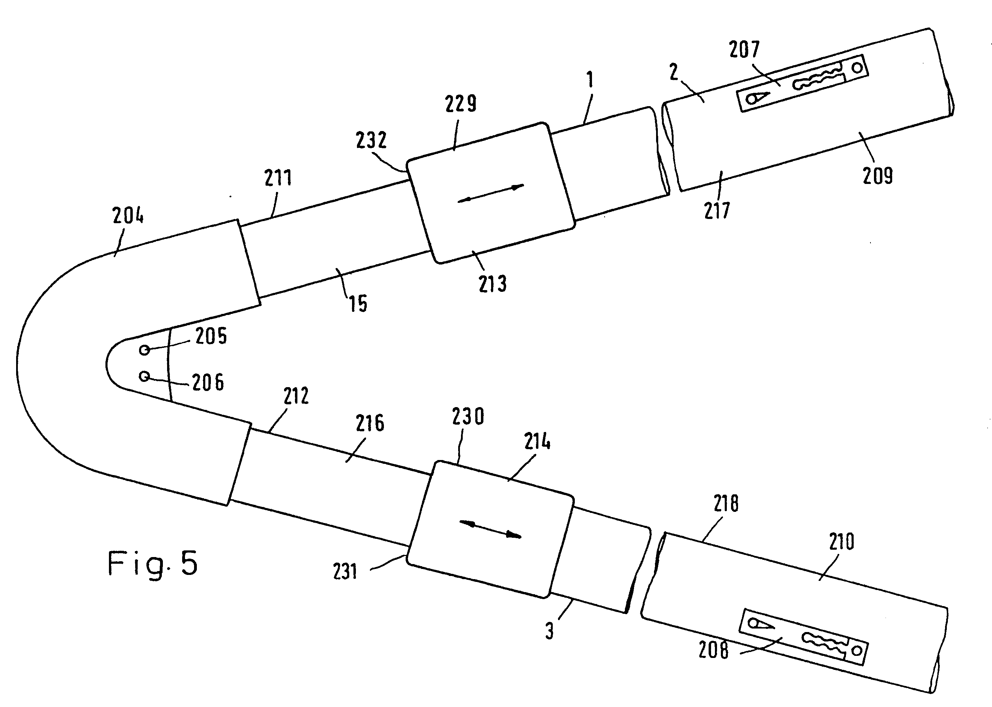

In Fig. 5 ist der hintere Bereich eines Gabelbaumes 1 nach einer weiteren Ausführungsform veranschaulicht, wobei der vordere Bereich mit Bugbeschlag weggelassen wurde, da er an sich bekannt ist. Im hinteren Bereich ist der Gabelbaum 1 in seiner Länge verstellbar.

Der Gabelbaum 1 besteht aus zwei nach außen gekrümmten Bäumen 2, 3, welche vorne mit dem nicht dargestellten Bugbeschlag und hinten mit einem Heckbeschlag 204 miteinander verbunden sind. Der Heckbeschlag 204 besteht üblicherweise aus einem Kunststoffteil und enthält zwei Bohrungen 205, 206, durch welche eine Trimmschot (nicht dargestellt) hindurchgeführt wird, welche das Schothorn des nicht dargestellten Segels hält und in zwei Belegklemmen 207, 208 festlegbar ist.

Die Bäume 2 und 3 bestehen aus Rohren 209, 210 und 211, 212, welche teleskopartig ineinander verschiebbar sind. Die jeweils vorgenommene Einstellung der Relativlage ist hierbei je durch eine allgemein mit 213 bzw. 214 bezeichnete formschlüssige Kupplung fixierbar.

Die Rohre 211 und 212 sind fest mit dem Heckbeschlag 204 verbunden und bilden die hinteren Baumabschnitte 215 und 216, welche in die vorderen Baumabschnitte 217, 218 einschiebbar sind. Zu diesem Zwecke entspricht der Außendurchmesser der Rohre 211 und 212 im wesentlichen dem Innendurchmesser der Rohre 209 und 210.

Die formschlüssigen Kupplungen 213 bzw. 214 zum Fixieren der eingestellten Länge sind in den übrigen Figuren der Zeichnungen in verschiedenen Ausführungsformen veranschaulicht.

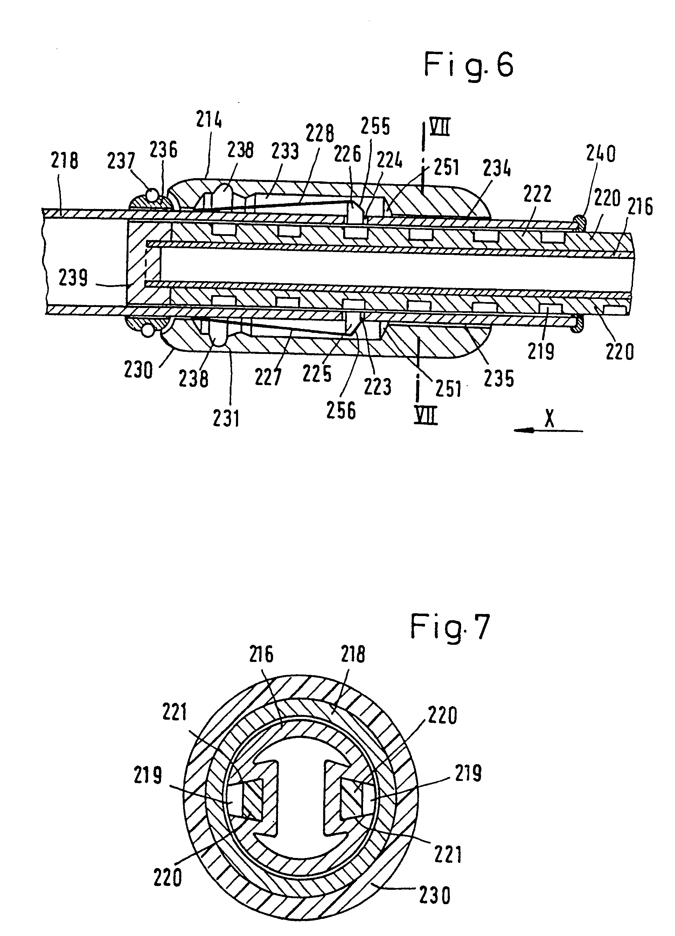

In Fig. 6 ist ein Längsschnitt durch den Baum 3 gemäß Fig. 5 im Bereich der formschlüssigen Kupplung 214 in einer ersten Ausführungsform gezeigt. Die Schnittebene entspricht hierbei der Zeichnungsebene von Fig. 5. Bei dieser Ausführungsform weist der hintere Baumabschnitt 216 eine Anzahl von Ausnehmungen 219 auf, welche in gleichmäßigen Abständen über die Länge des hinteren Baumabschnittes 216 verteilt sind.

Bei der bevorzugten Ausführungsform, welche sich auch aus der Schnittansicht längs der Linie VII-VII aus Fig. 5 ergibt, wie sie in Fig. 7 veranschaulicht ist, sind die Ausnehmungen 219 in regelmäßigen Abständen in einer Schiene 220 ausgebildet, welche bevorzugt aus Kunststoff hergestellt ist. Wie sich aus der Ansicht gemäß Fig. 7 ergibt, sind zwei derartige Schienen 220 in horizontaler Ebene einander gegenüberliegend in zwei im Querschnitt im wesentlichen schwalbenschwanzförmigen Nuten 221 formschlüssig in den hinteren Baumabschnitten 216 bzw. 215 gehalten. Die Nuten 221 sind einstückig in den bevorzugt aus Aluminiumstrangpreßprofilen bestehenden Rohrabschnitten 211, 212 ausgebildet. Durch die veranschaulichte Anordnung der Nuten 221 wird gleichzeitig das Widerstandsmoment der hinteren Baumabschnitte 215, 216 in der Hauptbelastungsebene, welche in der Zeichnungsebene von Fig. 5 liegt, erheblich erhöht. Darüberhinaus wird durch die veranschaulichte Konstruktion der Ausnehmungen 220 die Wasserdichtigkeit der hinteren Baumabschnitte 215, 216 beibehalten und ein wesentlicher Arbeitsaufwand beim Herstellen der Ausnehmungen 220 vermieden.

Die Querschnittsabmessungen der Nuten 221 und der Schienen 220 sind dabei derart bemessen, daß die zwischen den Ausnehmungen 219 verbleibenden Materialbereiche der Schiene 220 mit dem Außenumfang der hinteren Baumabschnitte 216 eine gemeinsame Oberfläche bilden.

Zur Herstellung der formschlüssigen Kupplung sind in den vorderen Baumabschnitten 217 bzw. 218 zwei einander gegenüberliegende Bohrungen 224, 225 ausgebildet, deren Lage der Ausnehmungen 219 entspricht. In den Bohrungen 223 bzw. 224 sind zwei Formkörper 225, 226 beweglich angeordnet. Die einander gegenüberliegenden Formkörper 225, 226 sind in den Bohrungen durch Blattfedern 227, 228 gehalten, welche an ihren von den Formkörpern 225, 226 entfernt liegenden Enden mit den vorderen Baumabschnitten verbunden sind. Die Anordnung ist hierbei derart getroffen, daß die Blattfedern 227, 228 in ihrer entlasteten Stellung die Formkörper 225, 226 bevorzugt noch innerhalb der Bohrungen 223, 224 halten.

Die allgemein mit 214 bezeichnete formschlüssige Kupplung besteht somit aus den durch die Bohrungen 223, 224 hindurchbewegbaren Formkörpern 225, 226, welche in die in Abständen an den hinteren Baumabschnitten 216 vorgesehene Ausnehmungen 219 einrückbar sind. Zum Einrücken der Formkörper 225, 226 gegen den Druck der Blattfedern 227, 228 sind Handhaben 229, 230 bei der in den Figuren 5 bis 7 veranschaulichten Ausführungsform vorgesehen

Bei dieser Ausführungsform besteht die Handhabe 230 aus einer Gummihülse 231 bzw. 232, welche auf den vorderen Baumabschnitten 217 bzw. 218 axial verschiebbar ist. Die Gummihülse 231 enthält einen inneren Hohlraum oder Aussparung 233, welcher die Blattfedern 227, 228 mit den Formkörpern im Ruhezustand in der entspannten Lage aufnimmt. Die Blattfedern 227, 228 werden in ihrer mindestens teilweise unbelasteten Lage derart durch den Hohlraum 233 gehalten, daß sie außer Eingriff mit den Ausnehmungen 219, jedoch immer noch in Eingriff mit den Bohrungen 223, 224 sind.

Zum Einrücken der formschlüssigen Kupplung 214 wird die Gummihülse in der Ansicht von Fig. 6 in Richtung des Pfeiles X verschoben, so daß die am Hinterende liegenden Flächen 234, 235 die Formkörper 225, 226 in die Ausnehmungen 219 drücken.

Zur Erleichterung dieser Schiebebewegung ist zwischen den Nockenflächen 234, 235 und dem Hohlraum 233 eine Schrägfläche 251 vorgesehen, welche bei Verschiebung der Gummihülse 231 auf entsprechende Schrägflächen 255, 256 an den Formkörpern 225, 226 aufgleitet.

Bei der veranschaulichten Ausführungsform sind die Blattfedern 227, 228 an dem vorderen Baumabschnitt 218 mittels eines ringförmigen Halteteiles auf der Außenseite des Baumabschnittes 218 gehalten. In den ringförmigen Halteteil 236 ist außen ein Stahlring 237 eingesetzt, welcher in der eingerückten Stellung der Kupplung 214 in einer Aussparung 238 auf der Innenseite der Gummihülse einrastet.

In der verriegelten Stellung wird durch die Flächen 234, 235 aufgrund der Tatsache, daß die Hülse 231 aus Gummi besteht, ein Eindringen von Wasser in die Kupplung 214 verhindert.

Der hintere Baumabschnitt 216 ist an seinem Vorderende mit einem Endstück 239 verschlossen. Ferner weist das Ende des vorderen Baumabschnittes 218 noch einen Dichtwulst 240 aus Gummi oder Kunststoff auf, welcher gegen den hinteren Baumabschnitt 216 anliegt und an dieser Stelle ein Eindringen von Wasser verhindert. Die Verhältnisse sind hierbei bevorzugt derart getroffen, daß bei eingerasteter Kupplung 214 der Dichtwulst 240 zwischen zwei nebeneinanderliegenden Ausnehmungen 219 liegt.

Der Vollständigkeit halber wird darauf hingewiesen, daß die Schienen 220 sich über die gesamte Länge der hinteren Baumabschnitte 216 erstrecken. Zum Zusammenbau werden die Schienen 220 von einem Stirnende der hinteren Baumabschnitte 215 bzw. 216 eingeschoben und infolge der den Nuten 221 entsprechenden trapezförmigen Querschnittsform darin festgehalten

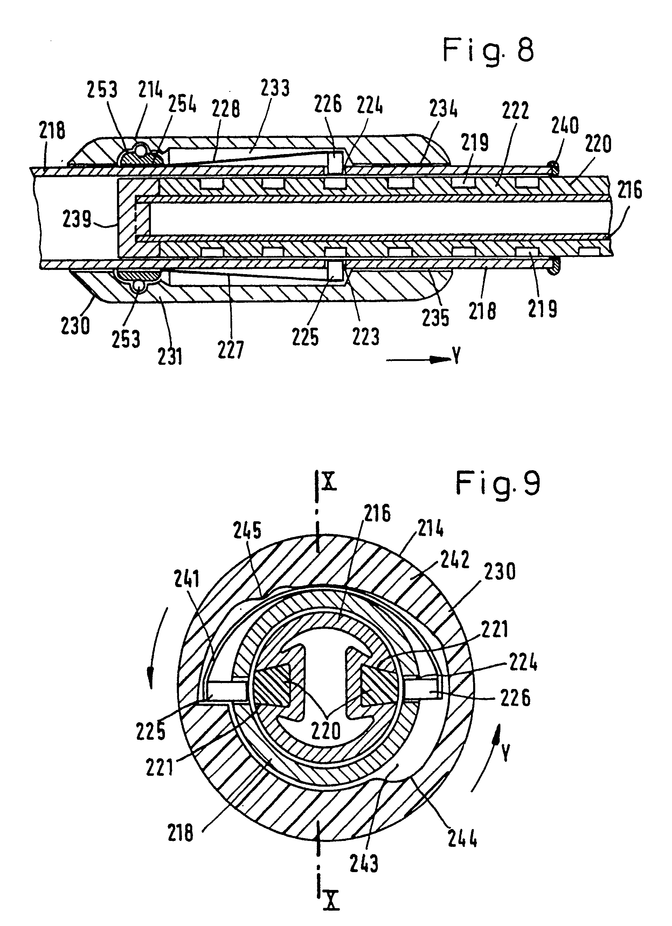

Fig. 8 zeigt in einer Fig. 6 entsprechenden Darstellung eine abgewandelte Ausführungsform nach der Erfindung. Bei dieser Ausführungsform wird zum Einrücken der Kupplung 214 die Hülse 231 nach rechts in Richtung des Pfeiles Y verschoben. Die zum Einrücken der Kupplung 214 vorgesehenen Nockenflächen bestehen hierbei aus einer Ringfläche 254, welche an einer inneren Verstärkung 252 der Hülse 231 vorgesehen ist. Die innere Verstärkung 252 kann aus einem Kunststoffteil bestehen, wobei die Verbindung mit der ebenfalls bevorzugt aus Gummi oder Kunststoff bestehenden Hülse 231 über einen Kupplungsabschnitt 253 an der ringförmigen Verstärkung 252 formschlüssig sein kann. Bei dieser Ausführungsform gleitet beim Verriegeln der Kupplung 214 die Nockenfläche 254 über die Länge der Blattfedern 227, 228 und drückt in der Endstellung die Formkörper 225, 226 in die Ausnehmungen 219. In der eingerückten Endstellung der Kupplung 214 ist die am Hinterende der Hülse 251 vorgesehene auf den vorderen Baumabschnitten 217, 218 gleitende Ringfläche 257 der Hülse 231 über das Hinterende der vorderen Baumabschnitte 216, 218, d.h. über den Dichtwulst 240 hinausgeschoben und liegt zusätzlich dichtend an dem hinteren Baumabschnitt 214 an. Die dichtende Anlage der Hülse 231 ist durch die Elastizität des Werkstoffes gewährleistet.

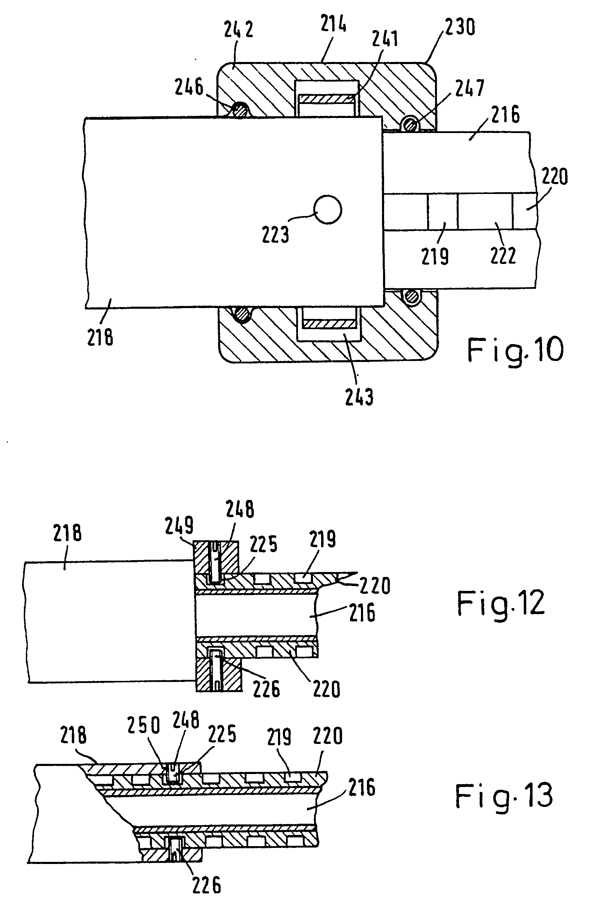

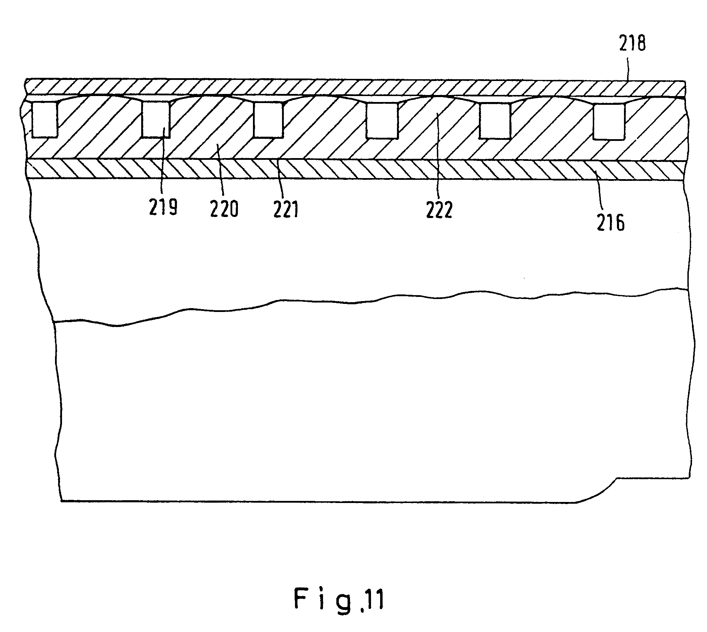

Die Ausführungsform gemäß Figuren 9 und 10 entspricht in ihren wesentlichen die Kupplung bildenden Einzelteilen den Ausführungsformen gemäß Fig. 5 bis 8, wobei für gleiche Teile gleiche Bezugszeichen verwendet wurden. Bei der Ausführungsform gemäß Fig. 9 und 10 ist jedoch anstelle einer axialverschieblichen Handhabe eine drehbare Handhabe 230 zum Einrücken der Formkörper 225, 226 in die Ausnehmungen 219 vorgesehen.

Wie veranschaulicht, sind die Formkörper 225, 226 bei dieser Ausführungsform durch eine bogenförmige Blattfeder 241 miteinander verbunden, welche lose auf der Außenseite des vorderen Baumabschnittes 218 aufliegt. Die Form der Blattfeder 241 ist hierbei derart gewählt, daß die Formkörper 225, 225 in der dargestellten ausgerückten Stellung, in welcher die Blattfeder 241 zumindest teilweise entspannt ist, noch im Bereich der Bohrungen 223, 224 des vorderen Baumabschnittes 218 gehalten werden. Zum Einrücken der Formkörper 225, 226 in die Ausnehmungen 219 weist die als Drehhülse 242 ausgebildete Handhabe 230 einen zum vorderen Baumabschnitt 218 hin offenen Raum 243 auf, welcher mit einer Nockenfläche 244 versehen ist.

Wie veranschaulicht, ist die Nockenfläche 244 derart gestaltet, daß durch eine Vierteldrehung in Richtung der Pfeile Y die Formkörper 225, 226 durch die Bohrungen 223, 224 im vorderen Baumabschnitt 218 hindurch in die Ausnehmungen 219 der Schienen 220 hineingedrückt werden, welche in der beschriebenen Weise mit dem hinteren Baumabschnitt 216 verbunden sind.

Um eine Verriegelung in der eingerückten Stellung der Kupplung 214 zu gewährleisten, weist die Nockenfläche 244 an entsprechender Stelle einen Vorsprung 245 auf, welcher in der verriegelten Stellung hinter dem Formkörper 225 einrastet.

Wie aus Fig. 9 ersichtlich, kann die Drehhülse 242 noch zusätzliche Dichtungen 246, 247 aufweisen, welche die Drehhülse 242 gegenüber dem vorderen Baumabschnitt 218 bzw. dem hinteren Baumabschnitt 216 abdichten. Die Anordnung ist wiederum so getroffen, daß zumindest die Dichtung 247 im eingerückten Zustand der Kupplung 214 auf dem Materialbereich der Schiene 220 aufliegt, welche zwischen den Ausnehmungen 219 eine gemeinsame Oberfläche mit dem hinteren Baumabschnitt 216 aufweist.

Fig. 11 zeigt in einer vergrößerten Querschnittsansicht Einzelheiten der bevorzugt aus Kunststoff bestehenden Schiene 220. Wie gezeigt, sind bei der bevorzugten Ausführungsform der in den Nuten 221 aufgenommenen Kunststoffschienen 220, welche die Aussparungen 219 enthalten, die zwischen den Aussparungen 219 vorhandenen Materialbereiche leicht ballig ausgebildet. Die balligen Materialbereiche 222 stehen hierbei geringfügig über den Außendurchmesser der hinteren Baumabschnitte 215, 216 vor. Hierdurch wird gewährleistet, daß die hinteren Baumabschnitte verkantungsfrei und leichtgängig in den vorderen Baumabschnitten 217, 218 verschiebbar sind, da anstelle einer großflächigen Berührung lediglich punktuelle Berührungen im Bereich der Materialstreifen 222 erzeugt werden.

In den Figuren 12 und 13 sind noch zwei besonders einfache Ausführungsformen nach der Erfindung veranschaulicht, bei denen die Formkörper 225, 226 als Schraubzapfen 248 ausgebildet sind.

Bei der Ausführungsform gemäß der Fig. 12 sind die Schraubzapfen 248 in eine auf dem hinteren Baumabschnitt 216 verschiebbare Hülse 249 an zwei einander gegenüberliegenden Stellen eingeschraubt und greifen in die Ausnehmungen 219 ein. Hierdurch kann die Hülse 249 an einer bestimmten Stelle längs des hinteren Baumabschnittes 216 fixiert werden und als Anschlag für den Baumabschnitt 216 gegenüber dem vorderen Baumabschnitt 218 dienen, wenn dieser durch den durch das Segel ausgeübten Druck gegen den Baumabschnitt 218 bewegt wird.

Bei der Ausführungsform gemäß Fig. 13 sind die Schraubenzapfen 248 durch entsprechende Gewindebohrungen 250 in den vorderen Baumabschnitten 218 hindurchgeschraubt und greifen in die Ausnehmungen 219 ein.

Bei bevorzugten Ausführungsformen können die hinteren Baumabschnitte 215, 216 vollständig mit einem Kunststoffschaum gefüllt sein (nicht dargestellt), während die vorderen Baumabschnitte 217, 218 ab der vordersten Stellung die das Vorderende (Verschlußteil 239) der hinteren Baumabschnitte 215, 216 im Inneren der Rohre 209, 210 einnehmen kann, ebenfalls ausgeschäumt sind.

Um sämtlichen Segelschnitten Rechnung tragen zu können, sollte der Verschiebeweg der Rohre 211, 212 in den Rohren 209, 210 etwa 30 bis 40 cm betragen.

Es wurden obenstehend beispielhafte Ausführungsformen der Erfindung beschrieben, wobei dem Fachmann Änderungen und Abwandlungen offensichtlich sein werden, ohne vom Grundgedanken der Erfindung abzuweichen. Derartige Änderungen können insbesondere die Gestaltung der formschlüssigen Kupplungen 13 bis 14 bzw. die verschiedensten Arten möglicher Abdichtungen betreffen.

## Ansprüche

1. Gabelbaum (1) oder Spreizgaffel für Windsurfbretter (2) mit zwei nach außen gekrümmten in der Länge veränderbaren Bäumen und mit einem an einem Mast befestigbaren Bugbeschlag und einem Heckbeschlag (10) zum Halten des Schothorns eines zwischen den beiden als Handhabe dienenden Bäumen gespannten Segels, wobei die Bäume durch Bug- und Heckbeschlag miteinander verbunden sind, **dadurch gekennzeichnet,** daß die Bäume (2, 3) aus teleskopartig verlängerbaren und verkürzbaren Rohren (4, 5, 6, 7) bestehen, und daß an jedem der Bäume (2, 3) eine Einrichtung (8, 9) zum Fixieren der eingestellten Länge vorgesehen ist.

2. Gabelbaum nach Anspruch 1, dadurch gekennzeichnet, daß der Heckbeschlag (10) mit zwei hinteren Baumabschnitten (11, 12, 217, 218) fest verbunden ist, deren Außendurchmesser etwa dem Innendurchmesser der mit dem Bugbeschlag fest verbundenen, vorderen Baumabschnitte (13, 14, 215, 216) entspricht, und daß die hinteren Baumabschnitte (11, 12, 217, 218) in den vorderen Baumabschnitten (13, 14, 215, 216) verschiebbar aufgenommen sind.

3. Gabelbaum nach Anspruch 1 oder 2, dadurch gekennzeichnet, daß die Vorrichtung (8, 9) zum Fixieren aus auf den hinteren Baumabschnitten (11, 12) versetzbaren und festlegbaren Klemmteilen (118) bestehen.

4. Gabelbaum nach einem der Ansprüche 1 bis 3, dadurch gekennzeichnet, daß die Klemmteile (118) aus mittels Exzenterschnallen (21) zusammendrückbaren Schalen (118) bestehen, daß die Klemmteile (118) auf der Innenseite eine Gummierung (122) aufweisen, daß die Schalen (118) aus einem Kunststoff bestehen und daß die Klemmteile an der den vorderen Baumabschnitten (13, 14) zugewandten Vorderkante eine Dichtung (125) aufweisen.

5. Gabelbaum nach einem der Ansprüche 1 bis 3, dadurch gekennzeichnet, daß die Vorrichtungen (8, 9) aus Überwurfmuttern (18, 19) auf Gewinden (20) an den vorderen Baumabschnitten bestehen, daß ein konischer Ring (21) vorgesehen ist, welcher mittels der Überwurfmutter (20) Schlitze (22) in den Enden (15, 16) der vorderen Baumabschnitte (13, 14) zusammenpreßt.

6. Gabelbaum nach Anspruch 1 oder 2, dadurch gekennzeichnet, daß an jedem der Bäume (2, 3) eine formschlüssige Kupplung (213, 214) zum stufenweisen Fixieren der eingestellten Relativlage der Baumabschnitte (215, 216, 217, 218) zueinander vorgesehen ist.

7. Gabelbaum nach Anspruch 6, dadurch gekennzeichnet, daß die Kupplungen (13, 14) Formkörper (25, 26) aufweisen, welche in in Abständen an den hinteren Baumabschnitten (15, 16) vorgesehene Ausnehmungen (19) einrückbar sind, daß die Formkörper (25, 26) durch eine Handhabe (29, 30) einrückbar sind und daß die Formkörper (25, 26) mit Federelementen (27, 28, 41) verbunden und in die gelöste Stellung vorgespannt sind.

8. Gabelbaum nach Anspruch 7, dadurch gekennzeichnet, daß die Ausnehmungen (19) in einer Kunststoffschiene (20) ausgebildet sind, welche in einer Nut (21) der hinteren Baumabschnitte (15, 16) formschlüssig gehalten ist und daß die Nut (21) und die Kunststoffschiene (20) einander entsprechende schwalbenschwanzförmige oder trapezförmige Querschnitte aufweisen.

9. Gabelbaum nach Anspruch 6 oder 7, dadurch gekennzeichnet, daß die Schienen (220) zwischen den Ausnehmungen (219) Materialbereiche (222) aufweisen, welche mit dem Außenumfang der hinteren Baumabschnitte (215, 216) eine im wesentlichen durchgehende Fläche bilden und daß die Materialbereiche (222) ballig und geringfügig über den Außenumfang vorstehend ausgebildet sind.

10. Gabelbaum nach einem der Ansprüche 7 bis 9, dadurch gekennzeichnet, daß die Federelemente (227, 228) durch mit den vorderen Baumabschnitten (217, 218) verbundene Blattfedern (227, 228) gebildet sind, daß die Handhabe (229, 230) als axial auf den vorderen Baumabschnitten (217, 218) verschiebbare, die Blattfedern (227, 228) und die Formkörper (225, 226) einschließende Hülse (231, 232) ausgebildet ist, daß die Formkörper (225, 226) beweglich in Bohrungen (223, 224) der vorderen Baumabschnitte (217, 218) angeordnet sind und daß die Hülse (231, 232) auf der Innenseite Nockenflächen (234, 235, 254) aufweist, welche beim Verschieben die Formkörper (225, 226) durch die Bohrungen (223, 224) in die Ausnehmungen (219) der hinteren Baumabschnitte (215, 216) drücken.

11. Gabelbaum nach Anspruch 10, dadurch gekennzeichnet, daß die Hülse (231, 232) aus Kunststoff oder Gummi besteht und die Nockenflächen (234, 235) durch eine auf den vorderen Baumabschnitten (217, 218) gleitend verschiebbare Ringfläche gebildet sind, welche eine einem zum Baumabschnitt (217, 218) geneigte Schrägfläche (251) aufweist, die in einen die mindestens teilweise entspannten Federn (227, 228) nebst Formkörpern (225, 226) aufnehmenden Hohlraum (233) übergeht.

12. Gabelbaum nach einem der Ansprüche 6 bis 9, dadurch gekennzeichnet, daß die Formkörper (225, 226) mit einem radialen Federelement (241) verbunden sind, daß die Handhabe (229, 230) als drehbare Hülse (242) ausgebildet ist, welche das Federelement (241) und die Formkörper (225, 226) einschließt, daß die Formkörper (225, 226) beweglich in Bohrungen (223, 224) der vorderen Baumabschnitte (217, 218) durch das Federelement (241) gehalten sind und daß die Hülse (242) auf der Innenseite Nockenfläche (244) aufweist, welche beim Drehen der Hülse (242) die Formkörper (225, 226) durch die Bohrungen (223, 224) in die Ausnehmungen (219) der hinteren Baumabschnitte (215, 216) drücken.

13. Gabelbaum nach Anspruch 12, dadurch gekennzeichnet, daß die Formkörper (25, 26) ein gemeinsames Federelement (41) aufweisen, welches lose auf den vorderen Baumabschnitten (17, 18) aufliegt.

## Claims

1. Wishbone (1) or gaff for windsurf boards (2) having two outwardly curved booms changeable in length and a bow fitting securable to a mast and a stern fitting (10) for holding the clew of a sail tensioned between the two booms serving as control grip, the booms being connected together by bow and stern fittings, characterized in that the bows (2, 3) consist of telescopically extendable and collapsible tubes (4, 5, 6, 7) and that on each of the booms (2, 3) a means (8, 9) is provided for fixing the set length.

2. Wishbone according to claim 1, characterized in that the stern fitting (10) is fixedly connected to two rear boom portions (11, 12, 217, 218) whose external diameter corresponds substantially to the internal diameter of the front boom portions (13, 14, 215, 216) fixedly connected to the bow fitting, and that the rear boom portions (11, 12, 217, 218) are displaceably received in the front boom portions (13, 14, 215, 216).

3. Wishbone according to claim 1 or 2, characterized in that the fixing means (8, 9) consist of clamp members (118) displaceable and lockable on the rear boom portions (11, 12).

4. Wishbone according to any one of claims 1 to 3, characterized in that the clamp members (118) consist of shells (118) compressible by means of eccentric clasps (21), that the clamp members (118) have on the inside a rubber coating (122), that the shells (118) consist of plastic and that the clamp members have a seal (125) at the front edge facing the front boom portions (13, 14).

5. Wishbone according to any one of claims 1 to 3, characterized in that the means (8, 9) consist of union nuts (18, 19) on threads (20) at the front boom portions, and that a conical ring (21) is provided which by means of the union nut (20) compresses slits (22) in the ends (15,16) of the front boom portions (13, 14).

6. Wishbone according to claim 1 or 2, characterized in that at each of the booms (2, 3) a positive coupling (213, 214) is provided for step wise fixing of the set relative position of the boom portions (215, 216, 217, 218) to each other.

7. Wishbone according to claim 6, characterized in that the couplings (13, 14) comprise shaped bodies (25, 26) which are adapted to be engaged in recesses (19) provided at intervals on the rear boom portions (15, 16), that the shaped bodies (25, 26) can be engaged via a grip (29, 30) and that the shaped bodies (25, 26) are connected to spring elements (27, 28, 41) and biased into the released position.

8. Wishbone according to claim 7, characterized in that the recesses (19) are formed in a plastic rail (20) which is held positively in a groove (21) of the rear boom portions (15, 16) and that the groove (21) and the plastic rail (20) have matching dovetail or trapezoidal cross-sections.

9. Wishbone according to claim 6 or 7, characterized in that the rails (220) comprise between the recesses (219) material regions (222) which with the outer periphery of the rear boom portions (215, 216) form a substantially continuous surface and that the material regions (222) are arched and project slightly beyond the outer periphery.

10. Wishbone according to any one of claims 7 to 9, characterized in that the spring elements (227, 228) are formed by leaf springs (227, 228) connected to the front boom portions (217, 218), that the control grip (229, 230) is formed as sleeve (231, 232) displaceable axially on the front boom portions (217, 218) and enclosing the leaf springs (227, 228) and the shaped bodies (225, 226), that the shaped bodies (225, 226) are disposed movably in bores (223, 224) of the front boom portions (217, 218) and that the sleeve (231, 232) comprises on the inside cam surfaces (234, 235, 254) which on displacement press the shaped bodies (225, 226) through the bores (223, 224) into the recesses (219) of the rear boom portions (215, 216).

11. Wishbone according to claim 10, characterized in that the sleeve (231, 232) consists of plastic or rubber and the cam surfaces (234, 235) are formed by a ring face which is slidingly displaceable on the front boom portions (217, 218) and which has a surface (251) which is inclined with respect to the boom portion (217, 218) and which merges into a cavity (233) receiving the at least partially relaxed springs (227, 228) in addition to the shaped bodies (225, 226).

12. Wishbone according to any one of claims 6 to 9, characterized in that the shaped bodies (225, 226) are connected to a radial spring element (241), that the hand control (229, 230) is constructed as rotatable sleeve (242) which encloses the spring element (241) and the shaped bodies (225, 226), that the shaped bodies (225, 226) are held movably in bores (223, 224) of the front boom portions (217, 218) by the spring element (241) and that the sleeve (242) comprises on the inside cam surfaces (244) which on rotation of the sleeve (242) press the shaped bodies (225, 226) through the bores (223, 224) into the recesses (219) of the rear boom portions (215, 216).

13. Wishbone according to claim 12, characterized in that the shaped bodies (25, 26) have a common spring element (41) which lies loosely on the front boom portions (17, 18).

## Revendications

1. Wishbone (1) ou espar extensible pour planches à voile (2) comportant deux branches incurvées vers l'extérieur, de longueur réglable et un embout avant pouvant être fixé à un mât, ainsi qu'un embout arrière (10) destiné à retenir l'écoute d'une voile tendue entre les deux branches servant de poignée, les branches étant reliées entre elles par les embouts avant et arrière, caractérisé en ce que les branches (2, 3) sont constituées par des tubes (4, 5, 6, 7) pouvant être allongés et raccourcis télescopiquement, et en ce qu'un dispositif (8, 9) destiné à fixer la longueur réglée est disposé sur chacune des branches (2, 3).

2. Wishbone selon la revendication 1, caractérisé en ce que l'embout arrière (10) est relié rigidement à deux sections de branches postérieures (11, 12, 217, 218) dont le diamètre extérieur est sensiblement égal au diamètre intérieur des sections de branches antérieures (13, 14, 215, 216) reliées rigidement à l'embout avant et en ce que les sections de branches postérieures (11, 12, 217, 218) sont reçues dans les sections de branches antérieures (13, 14, 215, 216) de façon à pouvoir coulisser.

3. Wishbone selon la revendication 1 ou 2, caractérisé en ce que le dispositif (8, 9) de fixation comprend des éléments de verrouillage (118) pouvant être déplacés et fixés sur les sections de branches postérieures (11, 12).

4. Wishbone selon l'une quelconque des revendications 1 à 3, caractérisé en ce que les éléments de verrouillage (118) comprennent des pièces complémentaires (118) pouvant être serrées ensemble au moyen de boucles d'excentrique (21), en ce que les éléments de verrouillage (118) comportent sur leur face intérieure un caoutchoutage (122), en ce que les pièces (118) sont constituées par une matière plastique, et en ce que les éléments de verrouillage comportent un joint (125) sur le bord antérieur situé du côté des sections de branches antérieures (13, 14).

5. Wishbone selon l'une quelconque des revendications 1 à 3, caractérisé en ce que les dispositifs (8, 9) sont constitués par des manchons taraudés (18, 19) montés sur des filetages (20) situés sur les sections de branches antérieures, en ce qu'une bague conique (21) est présente qui comprime, au moyen du manchon taraudé (18, 19) les parties fendues (22) ménagées dans les extrémités (15, 16) des sections de branches (13, 14) antérieures.

6. Wishbone selon la revendication 1 ou 2, caractérisé en ce que chacune des branches (2, 3) comporte un accouplement par concordance de forme (213, 214) pour fixer mutuellement de façon stable la position relative établie des sections de branches (215, 216, 217, 218).

7. Wishbone selon la revendication 6, caractérisé en ce que les accouplements (13, 14) comportent des pièces profilées (25, 26) qui peuvent être encliquetées dans des évidements (19) situés à intervalles sur les sections de branches postérieures (15, 16), en ce que les pièces profilées (25, 26) peuvent être encliquetées par une poignée (29, 30), et en ce que les pièces profilées (25, 26) sont reliées à des éléments élastiques (27, 28, 41) et précontraintes dans la position desserrée.

8. Wishbone selon la revendication 7, caractérisé en ce que les évidements (19) sont formés dans une barre plastique (20) qui est retenue par concordance de forme dans une rainure (21) des sections de branches postérieures (15, 16), et en ce que la rainure (21) et la barre plastique (20) présentent des sections en queue d'aronde ou trapézoïdales en correspondance mutuelle.

9. Wishbone selon la revendication 6 ou 7, caractérisé en ce que les barres (220) comportent, entre les évidements (219), des zones de matières (222) qui forment avec la périphérie extérieure des sections de branches postérieures (215, 216) une surface sensiblement continue, et en ce que les zones de matière (222) ont une forme bombée dépassant légèrement de la périphérie extérieure.

10. Wishbone selon l'une quelconque des revendications 7 à 9, caractérisé en ce que les éléments élastiques (227, 228) sont formés par des ressorts à lames (227, 228) reliés aux sections de branches antérieures (217, 218), en ce que la poignée (229, 230) est réalisée sous la forme d'un manchon (231, 232) coulissant axialement sur les sections de branches antérieures (217, 218), embrassant les ressorts à lames (227, 228) et les pièces profilées (225, 226), en ce que les pièces profilées (225, 226), sont disposées de façon à pouvoir se déplacer dans des alésages (223, 224) des sections de branches antérieures (217, 218) et en ce que le manchon (231, 232) comporte, sur la face intérieure, des surfaces de came (234, 235, 254) qui enfoncent, en se déplaçant, les pièces profilées (225, 226), à travers les alésages (223, 224), dans les creux (219) des sections de branches postérieures (215, 216).

11. Wishbone selon la revendication 10, caractérisé en ce que le manchon (231, 232) est en matière plastique ou en caoutchouc, et en ce que les surfaces de came (234, 235) sont formées par une surface annulaire pouvant glisser sur les sections de branches antérieures (217, 218), qui présente une surface oblique (251) inclinée par rapport à un section de timon (217, 218), qui se raccorde à une cavité (233) recevant les ressorts (227, 228) au moins partiellement détendus, en plus des pièces profilées (225, 226).

12. Wishbone selon l'une quelconque des revendications 6 à 9, caractérisé en ce que les pièces profilées (225, 226) sont reliées à un élément élastique radial (241), en ce que la poignée (229, 230) est réalisée sous la forme d'un manchon rotatif (242) qui embrasse l'élément élastique (241) et les pièces profilées (225, 226), en ce que les pièces profilées (225, 226) sont retenues de façon à pouvoir se déplacer dans des alésages (223, 224) des sections de branches antérieures (217, 218) par l'élément élastique (241), et en ce que le manchon (242) comporte, sur sa face intérieure, des surfaces de came (244) qui enfoncent, lorsque le manchon (242) tourne, les pièces profilées (225, 226), à travers les alésages (223, 224), dans les creux (219) des sections de branches postérieures (215, 216).

13. Wishbone selon la revendication 12, caractérisé en ce que les pièces profilées (25, 26) comportent un élément élastique commun (41) qui repose de façon amovible sur les sections de branches antérieures (17, 18).

Fig.1

Fig. 2

EP 0 071 220 B2

Fig. 3

Fig. 4

EP 0 071 220 B2

Fig.5

16

## Fig. 6

## Fig. 7

Fig. 8

Fig. 9

Fig.10

Fig.12

Fig.13

Fig.11